(19) Europäisches Patentamt
European Patent Office
Office européen des brevets

(11) Veröffentlichungsnummer : **0 028 360**
**B1**

(12) # EUROPÄISCHE PATENTSCHRIFT

(45) Veröffentlichungstag der Patentschrift : **20.04.83**

(51) Int. Cl.³ : **C 02 F 3/32**, C 05 B 17/00

(21) Anmeldenummer : **80106456.9**

(22) Anmeldetag : **23.10.80**

(54) **Verfahren zum Aufbau definierter Phosphatdepots aus Abfallphosphaten.**

(30) Priorität : **03.11.79 DE 2944421**

(43) Veröffentlichungstag der Anmeldung : **13.05.81 Patentblatt 81/19**

(45) Bekanntmachung des Hinweises auf die Patenterteilung : **20.04.83 Patentblatt 83/16**

(84) Benannte Vertragsstaaten : **AT CH DE FR IT LI**

(56) Entgegenhaltungen :
**DE A 2 210 619**
**FR A 2 399 384**
**US A 3 770 623**

**THE QUARTERLY REVIEW OF BIOLOGY, Band 41, Nr. 4, Dezember 1966, Stony Brook Foundation, New York, US, « Phosphorus in sewage », Seiten 395-397**

(73) Patentinhaber : **Kickuth, Reinhold, Prof.Dr.**
**Gilsbergstrasse 9**
**D-3436 Hess.-Lichtenau (DE)**

(72) Erfinder : **Kickuth, Reinhold, Prof.Dr.**
**Gilsbergstrasse 9**
**D-3436 Hess.-Lichtenau (DE)**

(74) Vertreter : **Wolgast, Rudolf, Dr. et al**
**Bökenbusch 41 Postfach 11 03 86**
**D-5620 Velbert 11 Langenberg (DE)**

**EP 0 028 360 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Verfahren zum Aufbau definierter Phosphatdepots aus Abfallphosphaten

Die Erfindung betrifft ein Verfahren zum Aufbau eines Phosphatdepots, bei dem eine phosphathaltige wäßrige Flüssigkeit von einem Einlauf her einen mindestens seitlich durch eine Schicht geringer hydraulischer Leitfähigkeit begrenzten Wirkraum durchsetzt, der durch das Wurzelsystem von Lymnophyten aktiviert wird.

Es ist bekannt, daß alljährlich große Mengen löslicher Düngerphosphate anorganischer oder organischer Herkunft im landwirtschaftlich genutzten Boden fest gebunden und damit der pflanzlichen Aufnahme sowie jeder anderen potentiellen Nutzung entzogen werden. In diesen Fixierungsvorgang gehen zahlreiche Teilprozesse ein, über die in der Fachliteratur ausführlich berichtet wird. Auf landwirtschaftlich genutzten Böden wird durch diese Vorgänge nur der durchwurzelte Oberboden erfaßt, in der Regel nicht mehr als 30 bis 35 cm des Profils.

Langfristig gesehen läuft die Phosphatfixierung in der Bodenmatrix über Sorption, Ligandenaustausch an Tonmineralen, mikrobielle Synthese von organischen Phosphaten, Bildung von Apatiten und gemischten Phosphaten als Fällungskörper auf die Entstehung von Eisenphosphaten (Vivianit und Strengit) und Aluminiumphosphat (Variscit) hinaus nach Maßgabe

a) der Präsenz umsetzbarer Eisen- und/oder Aluminiumoxide und -hydroxide im Boden,

b) ihrer realisierbaren Umsetzung mit gelöstem Orthophosphat.

Für landwirtschaftlich genutzte Böden unserer Breiten weiß man, daß deren durchschnittlicher Gehalt an Eisen- und Aluminiumoxiden verbunden mit den im Boden ablaufenden biologischen und abiologischen Prozessen zu jährlichen Phosphateinbindungen von rund 75 kg pro Hektar Fläche führen kann.

Diese Größe ist — neben hydraulischen Determinanten — ein für die flächenhafte Abwasserklärung durch « Landbehandlung » wichtiger Wert, weil dadurch die Abwasser-Entsorgungskapazität auf etwa 100 Einwohnergleichwerte pro Hektar Landfläche begrenzt wird.

Zur Neubildung wirtschaftlich beachtlicher Phosphatdepots kann dieser Vorgang nicht führen, wie aus folgender Bilanz hervorgeht :

| | |
|---|---|
| Einbindungsrate pro Jahr und Hektar | 75 kg P |
| Erfaßter Wirkraum der Bodenmatrix | ca. 3 000 $m^3$/Hektar |
| Erfaßte Einwohner-Gleichwerte | ca. 100/Hektar |
| Einbindungskapazität (Tonnen P ; bei 11 % Fe und pH 7) | ca. 55 |
| Einbindungskapazität (Jahre) | ca. 750 |
| Wertindex für deponiertes P (nach 100 Jahren, basierend auf dem gegenwärtigen Preis von DM 2 800,-/ Tonne P) | ca. DM 20.000, |
| Wertindex für deponiertes P (bei Erschöpfung nach 750 Jahren) | ca. DM 150.000, |

Von Interesse ist in dieser Bilanz der Wertindex des nach 100 Jahren aufgebauten Phosphatdepots bzw. dessen Mächtigkeit, weil etwa innerhalb dieses Zeitraumes eine krisenhafte Situation der gegenwärtigen Phosphatversorgung eintreten wird. Die Mächtigkeit eines in dieser Zeit aufgebauten Phosphatdepots überschreitet 7.5 Tonnen Phosphat pro Hektar nicht.

Es ist ebenfalls bekannt, daß bei der Wurzelraumentsorgung von Abwässern nach dem eingangs genannten Verfahren (R. Kickuth, « Utilization of Manure by Land Spreading » ; EG Kommission EUR 5672e, Janssen Services, London 1977, S. 335 bis 343) in beachtlicher Menge Phosphat eliminiert wird. Dabei wird der Wirkraum mit Limnophyten der Arten Phragmites, Juncus, Typha, Schoenoplectus oder Eleocharis bepflanzt, die durch ein voluminöses Aerenchym nicht nur die Wurzeln unmittelbar, sondern auch den adhärierenden Wurzelraum mit Sauerstoff versorgen und das Wasser sehr wirksam von organischen und von sticktoffhaltigen Verunreinigungen befreien. Der Wirkraum einer Tiefe von ca. 60 cm wird dabei von einem Einlauf her horizontal von dem zu reinigenden Wasser durchsetzt.

Zur Neogenese nutzbarer Phosphatdepots führen die bis heute verwendeten Verfahren zur Abwasser-, Schlamm- und Müllbehandlung nicht.

Phosphate gehören zu den Rohstoffen, deren Vorräte sich besonders schnell erschöpfen werden. Zwar differieren die Schätzungen der mit den heutigen Mitteln erschließbaren Vorräte beträchtlich, doch selbst die günstigsten Prognosen rechnen nur mit Zeitspannen von 150 Jahren, die ungünstigsten jedoch nur mit 50 Jahren bis zur Erschöpfung der bekannten und vermuteten abbauwürdigen Lagerstätten.

Im Hinblick darauf ist es nicht zu vertreten, daß weltweit alljährlich gewaltige Phosphatmengen in Vitalprozesse und Produktionsverfahren eingeschleust und in deren Gefolge als Abfall — besonders Abwasserinhaltsstoffe — zudem mit umweltbelastenden Eigenschaften — dem meerwärts gerichteten Wasserstrom überantwortet, als Schlamm oder als Müll extrem verdünnt deponiert werden.

Die Aufgabe der Erfindung besteht darin, ein Verfahren der eingangs genannten Art anzugeben, das zum Aufbau eines Phosphatdepots geeignet ist.

Erfindungsgemäß wird diese Aufgabe dadurch gelöst, daß die Limnophyten in einen Wirkraum mit einer Eisen- und/oder Aluminium enthaltenden Bodenmatrix gepflanzt werden. Dadurch wird erreicht, daß durch gezielte technische und biotechnische Maßnahmen Geschwindigkeit und Ausmaß der Phosphateinbindung in Bodenmatrices sprunghaft erhöht und auf diese Weise wirtschaftlich ausbeutbare Phosphatvorräte angelegt werden können.

Zweckmäßigerweise werden die Limnophyten bei dem Verfahren nach der Erfindung aus denjenigen Arten ausgewählt, die über ihr Aerenchym den Luftsauerstoff ihrem Wurzelsystem und darüberhinaus dem adhärierenden Wurzelraum zuführen können und dadurch in der fixierenden, hydromorphen Bodenmatrix ein Muster aus aeroben und anaeroben Kleinbezirken aufbauen.

Für das erfindungsgemäße Verfahren werden zur Beschleunigung der Reaktion zwischen dem Phosphat und den Eisen- und/oder Aluminiumverbindungen Limnophyten ausgewählt, die aus ihrem Primär- und Sekundärstoffwechsel Eisen und/oder Aluminium in wasserlöslichen Komplexen mit hoher Bildungskonstante bindende Stoffe in den Wirkraum ausscheiden.

Für die Verarbeitung einer phosphathaltigen wäßrigen Flüssigkeit mit organischen und anorganischen Ballaststoffen werden die Limnophyten aus denjenigen Arten ausgewählt, bei denen die Ballaststoffe durch mit den Limnophyten vergesellschaftete Rhizosphärenorganismen abgebaut werden.

Besonders geeignete, aktive Systempartner sind Pflanzen der Röhrichtgesellschaften, die wegen ihrer besonderen morphologischen und physiologischen Merkmale die Stoffabläufe in der Bodenmatrix in hohem Maße prägen. Dazu gehören besonders Phragmites, Typha-Arten, Carex-Arten, Glyceria-Arten, Eleocharis-Arten, Juncus-Arten, Iris pseudacorus, Iris versicolor, Schoenoplectus-Arten, Phalaris-Arten, Arundo donax.

Bei dem erfindungsgemäßen Verfahren weist der Wirkraum eine Bodenmatrix mit Ton- und Schluffgehalten zwischen 30 und 70 Gew.-% bezogen auf das Trockengewicht der Bodenmatrix und einem Gehalt an eine quellfähige Dreischichtenstruktur bildenden Tonmineral von 10 bis 20 Gew.-% bezogen auf den Ton- und Schluffgehalt auf. Die Bodenmatrix kann ein eisen- und/oder aluminiumreiches Material aufweisen, das aus der Gruppe Eisenspat, Laterit, Terra rossa, Raseneisenerz, Bohneisenerz, Eisenerzröstprodukte, oolithische und brekziöse Sedimente des Eisenerzbergbaus ausgewählt wird. Das eisen- und/oder aluminiumreiche Material kann aber auch in der phosphathaltigen wäßrigen Flüssigkeit suspendiert sein.

Entsprechend den jeweiligen Bedingungen des Gefälles und der hydraulischen Leitfähigkeit wird die phosphathaltige Flüssigkeit von einer Seite her in den Wirkraum eingebracht, wiederum entsprechend den jeweiligen Gegebenheiten an der Oberfläche oder darunter.

Nach der Erfindung wird somit die Phosphateinbindung in die Bodenmatrix sprunghaft erhöht, wobei wirtschaftlich nutzbare Phosphatdepots gebildet werden. Die Maßnahmen dazu sind darauf gerichtet,

1. die Leitfähigkeit des Bodens so zu beeinflussen, daß dieser die phosphathaltige Flüssigkeit aufnimmt,

2. die Tiefe des Wirkraums bis zu 1.20 m zu vergrößern,

3. ein Matrixmuster aus aeroben und anaeroben Kleinbezirken in dem Boden aufzubauen,

4. die chemische Reaktion zwischen dem in der Flüssigkeit enthaltenen Phosphat und dem in der Bodenmatrix verfügbaren Eisen und/oder Aluminium zu beschleunigen.

Ein stark vereinfachter Ablauf des erfindungsgemäßen Verfahrens ist schematisch in der Abbildung dargestellt.

Kennzeichnend für die genannten Pflanzenarten ist es, daß sie bei voller Wassersättigung des Bodenkapillar-Systems dauernd einen Standort bis auf Tiefen von 120 cm und mehr (z. B. bei Phragmites vulgaris) durchwurzeln und ihn damit für alle die chemischen und physikalischen Vorgänge erschließen können, die mit dem Vorhandensein bzw. der Tätigkeit von lebenden und postmortalen Wurzelsystemen verbunden sind. Diese, für den Aufbau von Phosphatdepots im erfindungsgemäßen Sinne wichtigen Vorgänge sind folgende :

1. Die hydraulische Erschließung des Durchwurzelungsbereiches durch die permanente physikalische Aktivität der Wurzel während ihres Wachstums, die auch bei verdichteten Substraten mit hydraulischen Leitfähigkeiten von $10^{-7}$ m/s und darunter im Verlaufe weniger Jahre (zwischen 2 und 5 Jahren) zu korrespondierenden Zuständen der Leitfähigkeit mit Werten zwischen $10^{-3}$ und $10^{-2}$ m/s führt. Andererseits wird bei vorliegendem Lockermaterial durch Porenschluß und Verbauung eine Herabsetzung der hydraulischen Leitfähigkeit von $10^{0}$ ebenfalls auf Werte zwischen $10^{-3}$ und $10^{-2}$ m/s durch die Wurzeltätigkeit herbeigeführt. Damit führt die Pflanze unterschiedliche Ausgangssubstrate in korrespondierende Zustände über, die zu einer einheitlichen und ausreichenden Verweildauer der phosphathaltigen Lösungen führen, während derer die biologischen und chemischen Vorgänge bei der Phosphatfixierung vollständig ablaufen können. Das sich durch die Wurzeltätigkeit bildende Grobporensystem mit hoher hydraulischer Leitfähigkeit ist nach Absterben der Pflanzenwurzel mit humosem Material erfüllt, das für die hydraulische Erschließung der Bodenmatrix eine entscheidende Rolle spielt ;

2. die Einspeisung von Sauerstoff in die engere Umgebung der lebenden Wurzel über das den Röhrichtpflanzen eigentümliche Aerenchym. Dieser als solcher bekannte Vorgang führt zu einer Durchsetzung des sonst anaeroben Bodensubstrats mit aeroben Kleinbezirken in Wurzelnähe bis zu einer Tiefe von 120 cm. Hierdurch stellen sich mosaikartig verteilte unterschiedliche Redoxpotentiale ein, die nicht nur für die Mobilisierung der Eisenoxide und -hydroxide sowie für die Präzipitation der sich bildenden Eisenphosphate von Bedeutung sind, sondern auch die notwendige Voraussetzung für einen wirksamen Abbau der organischen Substanzen und Stickstoffverbindungen, die das Abfallphosphat z. B. im Abwasser ständig in großer Menge begleiten. Es ließ sich zeigen, daß in solchen Matrizen, die sich technisch kaum auf andere Weise realisieren lassen, ein außerordentlich rapider und durchgreifender

Abbau organischer Substanzen, auch von solchen mit refraktärem Charakter, und von Stickstoffverbindungen unter weitgehender Denitrifikation erreicht werden kann. Hektarleistungen von 100 bis 150 Tonnen pro Jahr organischer Substanz und 11 bis 15 Tonnen Stickstoff, die vollständig abgebaut bzw. durch Denitrifikation eliminiert werden können, konnten technisch realisiert werden.

3. Die unter 2. beschriebenen Abbauleistungen verbunden mit einer Sequestrierung von Eisen- und Aluminiumoxiden werden durch die im Wurzelraum der beschriebenen Pflanzen und unter den angegebenen Redoxbedingungen arbeitenden Mikroorganismen hervorgebracht. Dazu muß bemerkt werden, daß der im Prinzip seit 1903 bekannte sogenannte Rhizosphäreneffekt auch für die Pflanzen des Röhrichts in der Form zutrifft, daß in unmittelbarer Nähe der lebenden Wurzel Populationsverdichtungen der Mikrobengesellschaft um den Faktor 10 bis 100 und mehr (in Analogie zu den Landpflanzen) auftreten, die letztlich zu Organismendichten von $10^9$ bis $10^{11}$ lebenden Keimen pro $cm^3$ Boden im Wurzelbereich führen. Damit sind Organismendichten erreicht, die beispielsweise im Belüftungsbecken konventioneller Klärketten anzutreffen sind und den eigentlichen Abbau der Laststoffe bewirken. Die in den anaerob arbeitenden Kleinbezirken intermediär entstehenden organischen Säuren (Lactat u. a.) als Zwischenprodukte bei der Methanbildung bewirken nun eine umfängliche Sequestrierung der in der Matrix vorhandenen Eisen- und Aluminiumoxide und machen sie für eine Umsetzung mit herangeführtem Phosphat in homogener Phase zugänglich (R. Kickuth, K. Tubail : Geoderma 16 (1976) 219 bis 234, 433 bis 442.)

4. Die Sequestrierungsvorgänge erfahren eine bedeutende Verstärkung durch primäre Exkrete der Pflanzenwurzel, unter denen sich zahlreiche chelataktive Verbindungen aus dem Citratzyklus, aber auch spezifische und von Pflanzenart zu Pflanzenart unterschiedliche Metabolite befinden, wie z. B. Shikimisäre, Chinasäure, phosphorylierte Inosite, Uronsäuren, Reduktone, Aminosäuren und Zucker. Diese Substanzen verbunden mit der unterschiedlichen Durchwurzelungstiefe verschiedener Pflanzenarten bedingen ein höchst unterschiedliches zeitliches und mengenmäßiges Ausmaß der Phosphateinbindung in Abhängigkeit von der verwendeten Pflanzenart und dem vorliegenden Bodenmaterial.

In einer erfindungsgemäß hergerichteten und arbeitenden Bodenmatrix lassen sich nun sprunghaft verbesserte Fixierungsleistungen für Orthophosphat (und andere z. B. in Abwässern enthaltene Phosphate) erhalten, die das normale Einbindungsvermögen um das rund Fünfzigfache übertreffen können (bisweilen noch um höhere Werte). Eine unter diesen Bedingungen erstellte Bilanz führt zu folgenden Ergebnissen :

| | |
|---|---|
| Einbindungsrate pro Jahr und Hektar | 3 750 kg P |
| Erfaßter Wirkraum der Bodenmatrix | ca. 12 000 $m^3$/ha |
| Erfaßte Einwohner-Gleichwerte | ca. 5 000/ha |
| Einbindungskapazität (Tonnen P ; bei 5 % Fe und pH 7) | ca. 220 |
| Einbindungskapazität (Jahre) | ca. 60 |
| Wertindex für deponiertes P (nach 100 Jahren, basierend auf dem gegenwärtigen Preis von DM 2 800,-/Tonne P) | Kapazitätsüberschreitung |
| Wertindex für deponiertes P (bei Erschöpfung nach 60 Jahren) | ca. DM 616.000, |

Ein weiter, grundsätzlich und ökonomisch bedeutsamer Spielraum eröffnet sich für die Anwendung des Verfahrens in Abhängigkeit von der Einbindungskapazität und der Einbindungsdauer des jeweiligen Wirkraums :

Wie die Bilanz zeigt, erhält man schon nach verhältnismäßig kurzen Einbindungsdauern wie einem Jahr Phosphatdepots von ca. 4 Tonnen P pro Hektar. Ein solches Phosphatdepot bildet nach Entfernung des Limnophytenbestandes wertvolles Kulturland. Berücksichtigt man, daß die üblichen Kulturpflanzen 50 bis 80 kg P pro Jahr und Hektar verbrauchen, so reicht das Phosphatdepot für eine landwirtschaftliche Nutzung von mehr als 50 Jahren, ohne daß ein Phosphatdünger erforderlich wird. Andererseits ist das Phosphatdepot aber auch nach völliger Ausnutzung der Einbindungskapazität reich genug für eine Wiedergewinnung angesichts des Phosphatgehaltes gegenwärtig ausgebeuteter Lagerstätten. Das Phosphatdepot kann durch Anwendung von an sich bekannten, bei der Verhüttung phosphathaltiger Eisenerze eingesetzter Verfahren zu einem als Düngemittel geeigneten Produkt umgesetzt werden.

Das erfindungsgemäße Verfahren kann auch nach vorangegangener Einarbeitung eisenreicher Substrate der vorgenannten Art oder nach Austausch des Oberbodens bis zu einer berechneten Tiefe mit eben diesem Material durchgeführt werden. Einarbeitung von eisen- und/oder aluminiumreichem Material ist immer dann angezeigt, wenn

a) die Gehalte an aktivem Eisen und/oder Aluminium im erfaßten Bodenprofil (etwa 120 cm) 7 % deutlich unterschreiten, so daß bei einem mittleren Umsatz von etwa 3 750 kg Phosphat pro Jahr und Hektar Laufzeiten unter 80 Jahren resultieren,

b) die lokalen Umsatzraten für Phosphat infolge günstiger Außenbedingungen 4 000 kg pro Jahr und Hektar überschreiten.

Dabei kann als Berechnungsgrundlage für den auszutauschenden Bodenkörper davon ausgegangen werden, daß jeweils 10 Tonnen zugeführtes Eisen (in Form der genannten Erden, Erze oder industriellen Produkte) die Laufzeit für die Depotfläche um ca. ein Jahr erhöhen, wenn die Fixierung bei etwa neutralen pH-Werten erfolgt.

Die Anreicherung des zur Phosphatfestlegung vorgesehenen Standortes wird so vorgenommen, daß nach dem in bekannter Weise erfolgenden Roden bzw. Entfernen der vorhandenen Vegetation das ausgewählte und erfindungsgemäße eisenschüssige Material, z. B. ein Pyritabbrand mit ca. 50 % Eisen, mittels landwirtschaftlich üblichem Streugerät in einer Menge von 10 Tonnen Eisen pro berechnetem Bindungsjahr und Hektar augebracht und anschließend bei der Herrichtung des Bodenreliefs und des Pflanzbettes mit einem wendend arbeitenden Gerät auf etwa 30 cm unter Planum eingepflügt wird.

In einer weiteren Variante des Verfahrens wird der Boden in dem Bereich, der als Wirkraum vorgesehen ist, gegen ein eisen- und/oder aluminiumreiches Material ausgetauscht, und es werden alle geeigneten biotechnischen Maßnahmen zur Durchführung des Verfahrens mit einer solchen Bodenmatrix getroffen. Dabei können alle ärmeren oder reicheren oxidischen oder carbonatischen Eisen- und/oder Aluminiumerze zur Anwendung kommen, z. B. Spate, Laterite, Terra-rossa-artige Bodenkörper, Raseneisenerze und Bohneisenerze, aber auch oxidische Produkte von Erzrösten u. ä.

Handelt es sich um eisenschüssiges Material so geringer Korngrößen, daß es von dem zu immittierenden phosphathaltigen Schmutzwasser ohne Sedimentationsvorgänge im Pumpen- und Sammlersystem mitgeführt werden kann, so läßt sich dieses Material nach Maßgabe des Eisenbedarfs über das Sammlersystem in den zu beaufschlagenden Standort einpumpen und mit der fließenden Welle innerhalb des Standortes verfrachten ; Dosiereinrichtungen sind hierzu nicht erforderlich.

Mit solchen Maßnahmen lassen sich Kapazität, Lebensdauer und damit Wirtschaftlichkeit eines Phosphatdepots innerhalb weiter Grenzen willkürlich festlegen.

Die Phosphateinbindung wird im einzelnen so durchgeführt, daß im Falle phosphathaltiger Abwässer, um die es sich in aller Regel handelt, eine geeignete Depotfläche in Nähe der Phosphatquelle ausgewählt wird, die bei einer Größe von 2.30 bis 2.50 $m^2$ pro Einwohner-Gleichwert (einschl. 0.30 bis 0.50 $m^2$ Kapazitätsreserve für die weniger rapide verlaufende Einbindung während der kalten Jahreszeit) eine Hängigkeit von 0.4 bis 5° aufweisen soll. Unterhalb des durch die Limnophytenwurzel zu erschließenden Horizontes soll eine hydraulische Leitfähigkeit von $10^{-6}$ m/s tunlichst nicht überschritten werden, so daß im vollentwickelten Zustand ein leitender Wurzelhorizont über einem dichten Untergrund entsteht, durch den die zu entphosphatierende Lösung horizontal in Gefällerichtung strömt. In aller Regel ist der Entphosphatierungsprozeß nach einer Laufstrecke zwischen 30 und 90 m vom Immissionsort an gerechnet beendet. Das von den Phosphatfrächten befreite Wasser wird dann nach Verlassen der Bindungsmatrix einem offenen oder kanalisierten Vorfluter zugeführt.

Nur in Ausnahmefällen soll der Wurzelhorizont vertikal von der zu entphosphatierenden Lösung durchströmt werden, wobei die von ihren Frächten befreite Lösung dem Grundwasserkörper oder über ein Drainagesystem einem offenen Vorfluter zugeführt werden muß.

Der als Wurzelhorizont vorgesehene Oberboden kann wahlweise wasserzügig mit hydraulischen Leitfähigkeiten von $10^{-2}$ bis $10^{0}$ m/s oder dicht mit hydraulischen Leitfähigkeiten unter $10^{-4}$ m/s sein. In beiden Fällen werden im Verlaufe von etwa 4 bis 5 Jahren unter Last durch die Wurzeltätigkeit der erfindungsgemäß gewählten Pflanzenarten hydraulisch korrespondierende Zustände mit Leitfähigkeiten zwischen $10^{-3}$ bis $10^{-2}$ m/s hergestellt.

Wird der Standort mit wasserzügigem Oberboden als Ausgangssubstrat gewählt, so kann er von Beginn an, d. h. nach Einwurzeln und Durchtreiben der Bepflanzung sogleich unter die vorgesehene Vollast genommen werden, wobei der endgültige Eliminationserfolg allerdings erst nach 4 oder 5 Jahren erreicht wird. Geht man bei der Standortwahl von einem Oberboden geringerer hydraulischer Leitfähigkeit als $10^{-4}$ m/s aus, so kann der Standort erst mit dem fünften Jahr unter Vollast genommen werden, man erreicht jedoch für die zugeführten Teilmengen, die zum Schluß des ersten Betriebsjahres 25 % der Vollast nicht überschreiten sollen, eine vollständige Elimination. Das Anfahren solcher Depotflächen muß nach einem sorgfältig auf die Gegebenheiten abgestimmten Belastungsplan erfolgen.

Für die Durchführung des erfindungsgemäßen Verfahrens ist ein dichteres Material mit Ton- und Schluffgehalten zwischen 30 und 70 Gew.-% bezogen auf das Trockengewicht der Bodenmatrix in der zu durchwurzelnden Zone förderlich, wobei ein Gehalt von 10 bis 20 Gew.-% bezogen auf den Gesamt-Tongehalt an aufweitbaren Dreischicht-Tonmineralen von Montmorillonit-Typ und/oder Allophanen für den verfahrungsgemäßen Vorgang unerläßlich ist. Der für die Anlage des Phosphatdepots vorgesehene Standort wird im Herbst, vorzugsweise im Oktober, mit der für den Standort und die zu lösende Aufgabe entsprechenden Pflanzenart besetzt und zwar mit 1 bis 2 Pflanzen pro $m^2$ bei Arundo, 3 bis 4 Pflanzen pro $m^2$ bei Phragmites, Schoenoplectus, Typha und Glyceria sowie 6 bis 10 Pflanzen pro $m^2$ bei anderen zum Einsatz kommenden Limnophyten.

Die Immission des phosphatbelasteten Wassers beginnt nach Maßgabe des Wasserbedarfs im März, nachdem für den Winter eine Einschlämmung des Pflanzenbestandes mit Leitungs-, Regen-, Fluß- oder Teichwasser vorgenommen wurde.

Die Beschickung selbst wird nun so vorgenommen, daß bei Böden geringer Ausgangsleitfähigkeit ein auf die Einwohner-Gleichwerte berechnetes Areal mit dem Formfaktor 0.5 bis 0.3 von der Breitseite her in an sich bekannter Weise über ein Gerinne mit Kammschwelle, einem Zuleiter beliebigen anderen Typs mit Ausläufen, die das Immissionsgelände in der ganzen Breite bestreichen oder bei schwierigem Relief auch mit fliegenden Leitungen und verstellbaren Ausmündungen o. ä. beschickt wird, nachdem die zu entphosphatierende Lösung — in aller Regel Abwasser — erforderlichenfalls durch eine vorgeschaltete Rechenanlage von grobem Rechengut befreit wurde. Die für gewöhnlich sehr phosphatreichen

Feinsedimente werden dem Gelände zugeführt, um die Phosphatausbeute zu erhöhen. Die im engeren Immissionsbereich in der Gegend der Zuleiter zur Auflagerung gelangenden Feinsedimente werden in bekannter Weise aus den Nodien ausgewählter Pflanzenarten heraus nach oben durchwurzelt und dadurch wasserleitend erhalten und in einem Ausmaß von 75 bis 85 % pro Jahr bezogen auf ihren Gehalt an organischem Kohlenstoff mineralisiert.

Eingeleitetes phosphathaltiges Abwasser mit Phosphatgehalten zwischen 15 und 22 mg/l, einem $BSB_5$ von 350 und einem Gehalt an Gesamt-Stickstoff von 90 bis 110 mg/l verläßt die wirksame Bodenmatrix mit Gehalten zwischen 0.04 und 0.18 mg Phosphor/l, mit einem $BSB_5$ zwischen 7 und 15 und einem Gesamt-Stickstoffgehalt zwischen 4 und 14 mg/l. Jedoch ist praktisch das gesamte, immittierte Chlorid von ca. 150 mg/l noch im Auslaufwasser vorhanden.

In dem beispielhaft aufgeführten technischen Entphosphatierungsprozeß ergibt sich aus der Mineralisation der mitgeführten Schlämme eine jährliche Reliefauflandung von 2 bis 4 mm.

Obwohl die das Phosphat begleitenden organischen Verbindungen in starkem Maße anaerob abgebaut werden, ergibt sich dennoch so gut wie keine Geruchsbelästigung durch Faulgase, weil deren Entbindung aus den anaeroben Kompartimenten des aktiven Wurzelraums durch die feste, mineralische Bodenmatrix durch Sorption verhindert wird.

## Beispiel

Entphosphatierung eines kommunalen Abwassers einschließlich Entfernung der darin enthaltenden Feinsedimente.

Erfaßtes Einzugsgebiet : ca. 25 $km^2$
Erfaßte Einwohnerzahl : 2 500

Zusammensetzung der phosphathaltigen Abwässer :

| | | |
|---|---|---|
| ges.-Stickstoff | durchschnittl. | 95 mg/l |
| ges.-Phosphor | durchschnittl. | 20 mg/l |
| $BSB_5$ | durchschnittl. | 380 mg/l |

Beanspruchte Einbindungsfläche : $60 \cdot 90$ m = 5 400 $m^2$

Bodenmatrix : Oolithische und brekziöse Sedimente des Eisenerzbergbaus aus dem Salzgitter-Revier mit Eisengehalten um 11 %.

Ausgangsleitfähigkeit der Bodenmatrix : $3.5 \cdot 10^{-5}$ m/s

Immission des zu entphosphatierenden Abwassers mitsamt Feinsediment nach Passieren einer Grobrechenanlage über ein schmalseitig errichtetes Einlaufgerinne mit Kammschwelle von 60 m Länge.

Beschickung durch diskontinuierliches Einpumpen.

Durchschnittliche Schüttung : ca. 270 $m^3$/24 h

| | |
|---|---|
| Aktiver Limnophytenbestand : | Phragmites communis |
| Durchwurzelungstiefe : | 110 cm unter Planum |
| Erfaßter Wirkraum : | ca. 5 940 $m^3$ |
| Einbindungsrate pro Jahr : | ca. 1 970 kg P |
| Einbindungskapazität (Tonnen P ; bei 11 % Fe und pH 7) : | ca. 653 |
| Einbindungskapazität (Jahre) : | ca. 330 |
| Wertindex für deponiertes P (nach 100 Jahren, basierend auf dem gegenwartigen Preis von DM 2 800,-/Tonne P) : | ca. DM 550.000, |
| Wertindex für deponiertes P (bei Erschöpfung nach 330 Jahren) | ca. DM 1.8 mio |

Zusammensetzung der austretenden, entphosphatierten Lösung :

| | |
|---|---|
| ges.-Stickstoff | ca. 6 mg/l |
| ges.-Phosphor | ca. 0.1 mg/l |
| $BSB_5$ | ca. 10 mg/l |

**Ansprüche**

1. Verfahren zum Aufbau eines Phosphatdepots, bei dem eine phosphathaltige wäßrige Flüssigkeit von einem Einlauf her einen mindestens seitlich durch eine Schicht geringer hydraulischer Leitfähigkeit begrenzten Wirkraum durchsetzt, der durch das Wurzelsystem von Limnophyten aktiviert wird, dadurch gekennzeichnet, daß die Limnophyten in einen Wirkraum mit einer Eisen- und/oder Aluminium enthaltenden Bodenmatrix gepflanzt werden.

2. Verfahren nach Anspruch 1, dadurch gekennzeichnet, daß aus den Limnophyten diejenigen Arten ausgewählt werden, die über ihr Aerenchym den Luftsauerstoff ihrem Wurzelsystem und darüberhinaus

dem adhärierenden Wurzelraum zuführen können und dadurch in der fixierenden, hydromorphen Bodenmatrix ein Muster aus aeroben und anaeroben Kleinbezirken aufbauen.

3. Verfahren nach Anspruch 1 oder 2, dadurch gekennzeichnet, daß aus den Limnophyten diejenigen Arten ausgewählt werden, die aus ihrem Primär- und Sekundärstoffwechsel Stoffe in den Wirkraum ausscheiden, die Eisen und/oder Aluminium in Form wasserlöslicher Komplexe mit hoher Bildungskonstante binden.

4. Verfahren nach einem der vorstehenden Ansprüche, bei dem eine andere organische und anorganische Ballaststoffe enthaltende, phosphathaltige wäßrige Flüssigkeit eingesetzt wird, dadurch gekennzeichnet, daß aus den Limnophyten diejenigen Arten ausgewählt werden, bei denen die Ballaststoffe durch mit den Lymnophyten vergesellschaftete Rhizosphärenorganismen abgebaut werden.

5. Verfahren nach einem der Ansprüche 1 bis 4, dadurch gekennzeichnet, daß die Limnophyten aus der Gruppe Phragmites, Typha-Arten, Carex-Arten, Glyceria-Arten, Eleocharis-Arten, Juncus-Arten, Iris pseudacorus, Iris versicolor, Schoenoplectus-Arten, Phalaris-Arten, Arundo donax ausgewählt sind.

6. Verfahren nach einem der vorstehenden Ansprüche, dadurch gekennzeichnet, daß der Wirkraum eine Tiefe von bis zu 1.20 m und eine hydraulische Leitfähigkeit im Bereich von $10^{-3}$ bis $10^{-2}$ m/s besitzt.

7. Verfahren nach Anspruch 6 mit einem horizontal von der phosphathaltigen wäßrigen Flüssigkeit durchsetzten Wirkraum, dadurch gekennzeichnet, daß der Wirkraum nach unten durch eine Schicht mit einer hydraulischen Leitfähigkeit von höchstens $10^{-6}$ m/s begrenzt wird.

8. Verfahren nach Anspruch 7, dadurch gekennzeichnet, daß der Wirkraum vom Einlauf her ein Gefälle im Bereich von 0.4 bis 5° aufweist.

9. Verfahren nach Anspruch 8, dadurch gekennzeichnet, daß der Wirkraum einen dem Einlauf gegenüberliegend angeordneten, an einen Vorfluter angeschlossenen Auslauf aufweist.

10. Verfahren nach einem der Ansprüche 7 bis 9, dadurch gekennzeichnet, daß dem Einlauf ein Rechenwerk vorgeschaltet ist.

11. Verfahren nach einem der vorstehenden Ansprüche, dadurch gekennzeichnet, daß der Wirkraum eine Bodenmatrix mit Ton- und Schluffgehalten zwischen 30 und 70 Gew.-% bezogen auf das Trockengewicht der Bodenmatrix und einem Gehalt an eine quellfähige Dreischichtenstruktur bildenden Tonmineral von 10 bis 20 Gew.-% bezogen auf den Ton- und Schluffgehalt aufweist.

12. Verfahren nach Anspruch 11, dadurch gekennzeichnet, daß die Bodenmatrix ein eisen- und/oder aluminiumreiches Material aufweist, das aus der Gruppe Eisenspat, Laterit, Terra rossa, Raseneisenerz, Bohneisenerz, Eisenerzröstprodukte, oolithische und brekziöse Sedimente des Eisenerzbergbaues ausgewählt wird.

13. Verfahren nach Anspruch 11 oder 12, dadurch gekennzeichnet, daß das eisen- und/oder aluminiumreiche Material in der phosphathaltigen wäßrigen Flüssigkeit suspendiert wird.

**Claims**

1. Method for building up a phosphate deposit in which method a phosphate containing aqueous liquid is passed from an inlet through a reaction space at least laterally defined by a layer having poor hydraulic conductivity, and in which method said reaction space is activated by means of the root system formed by plants of Limnophytae species, characterized in that the Limnophytae are planted in a reactive space including a soil matrix containing iron and/or aluminum.

2. Method as in Claim 1, characterized in that from the Limnophytae from those species are selected which are adapted to supply oxygen from the air via their aerenchymatic tissue to the root system and, additionally, to the adherent rhizosphere and to thereby form in the binding hydromorphous soil matrix a pattern of aerobic and anaerobic micro compartments.

3. Method as in Claims 1 or 2, characterized in that from the Limnophytae those species are selected, which, from their primary and secondary metabolisms, give off into the reactive space substances which form water-soluble complexes of high formation constant with iron or aluminum.

4. Method as in anyone of the preceding claims, wherein a phosphate-containing aqueous liquid containing other organic and anorganic burdens is used, characterized in that from the Limnophytae those species are selected, in which the burdens are degraded by rhizosphere organisms associated with the Limnophytae.

5. Method as in anyone of the claims 1 to 4, characterized in that Limnophytae are selected from the group consisting of Phragmites, Typha species, Carex species, Glyceria species, Eleocharis species, Juncus species, Iris pseudacorus, Iris versicolor, Schoenoplectus species, Phalaris species, Arundo donax.

6. Method as in anyone of the preceding claims, characterized in that the reactive space has a depth down to 1.20 m and has a hydraulic conductivity in the range from $10^{-3}$ to $10^{-2}$ m per sec.

7. Method as in Claim 6 using a reactive space passed through by the phosphate containing aqueous liquid in horizontal direction, characterized in that the reactive space is defined at the bottom by a layer having a hydraulic conductivity of $10^{-6}$ m per sec at the maximum.

8. Method as in Claim 7, characterized in that the reactive space has a descent extending from the inlet at an angle in the range from 0.4 to 5°.

9. Method as in claim 8, characterized in that the reactive space comprises an outlet opposite the inlet and connected to a receiving water conduit.

10. Method as in anyone of the claims 7 to 9, characterized in that a grating system is provided upstream of the inlet.

11. Method as in anyone of the preceding claims, characterized in that the reactive space comprises a soil matrix having a total content of fine and coarse clay minerals in the range between 30 and 70 percent by weight based on the weight of the dry soil matrix and having a content in the range from 10 to 20 percent by weight based on the total clay content of an expandable, three-layer structural clay mineral.

12. Method as in Claim 11, characterized in that the soil matrix comprises iron and/or aluminum rich material, said material being selected from the group : spatic iron ore, laterite, terra rossa, bog iron ore, pea ore, iron ore roast products, oolithic and breccious sediments from iron ore mining.

13. Method as in claims 11 or 12, characterized in that the iron and/or aluminum rich material is suspended in the phosphate containing aqueous liquid.

**Revendications**

1. Procédé pour la formation d'un dépôt de phosphate, dans lequel un liquide aqueux contenant du phosphate traverse par une entrée un espace d'action qui est limité au moins latéralement par une couche ayant une faible conductibilité hydraulique et qui est activé par le système radiculaire de limnophytes caractérisé par le fait que les limnophytes sont plantés dans un espace d'action avec une matrice de sol contenant du fer et/ou de l'aluminium.

2. Procédé selon la revendication 1, caractérisé par le fait que parmi les limnophytes on choisit les espèces qui peuvent amener l'oxygène atmosphérique par leur aerenchyme à leur système radiculaire et au-delà à l'espace de racines adhèrent et qui par ce fait forment un dessin de petits secteurs aérobie et anaérobie dans la matrice de sol fixatrice et hydromorphe.

3. Procédé selon les revendications 1 ou 2, caractérisé par le fait que parmi les limnophytes on choisit les espèces qui sécrètent de leur métabolisme primaire et secondaire dans l'espace d'action des substances, qui forme avec du fer ou de l'aluminium des complexes solubles dans l'eau avec une constante de formation élevée.

4. Procédé selon l'une quelconque des revendications ci-dessus dans lequel un autre liquide aqueux contenant des substances de ballastage organiques et inorganiques et du phosphate est utilisé, caractérisé par le fait que parmi les limnophytes on choisit les espèces, dans lesquelles les substances de ballastage sont démolies par des organismes de rhizosphère associés aux limnophytes.

5. Procédé selon l'une quelconque des revendications 1 à 4, caractérisé par le fait que les limnophytes sont choisis parmi le groupe phragmites, genre typha, genre carex, genre glyceria, genre eleocharis, genre juncus, iris pseudacorus, iris versicolor, genre schoenoplectus, genre phalaris, arundo donax.

6. Procédé selon l'une quelconque des revendications ci-dessus, caractérisé par le fait que l'espace d'action possède une profondeur jusqu'à 1.20 m et une conductibilité hydraulique dans le domaine de $10^{-3}$ à $10^{-2}$ m/s.

7. Procédé selon la revendication 6 avec un espace d'action horizontalement pénétré par le liquide aqueux contenant du phosphate, caractérisé par le fait que l'espace d'action est limité vers le bas par une couche dont la conductibilité hydraulique n'excède pas $10^{-6}$ m/s.

8. Procédé selon la revendication 7, caractérisé par le fait que l'espace d'action a de l'entrée une déclivité dans le domaine de 0,4 à 5°.

9. Procédé selon la revendication 8, caractérisé par le fait que l'espace d'action a une sortie qui est disposée d'en face de l'entrée et qui est raccordée à un émissaire.

10. Procédé selon l'une quelconque des revendications t à g, caractérisé par le fait qu'une installation de râteau est intercalée à l'entrée.

11. Procédé selon l'une quelconque des revendications ci-dessus, caractérisé par le fait que l'espace d'action a une matrice de sol ayant des contenances d'argile et d'ardoise entre 30 et 70 poids-% relatif au poids de la matrice de sol à l'état sec et une contenance de minéral argileux de 10 à 20 poids-% relatif à contenance d'argile et d'ardoise grosse, le minéral argileux formant une structure de trois couches susceptibles de gonflement.

12. Procédé selon la revendication 11, caractérisé par le fait que la matrice de sol contient une matière riche en fer et/ou aluminium, qui est choisie parmi le groupe de spath de fer, latérite, terra rossa, fer limoneux, fer limoneux oolitique pisiforme, produits de grillage de minerai de fer, sédiments oolitiques et brécheux du minage de minerai de fer.

13. Procédé selon les revendications 11 ou 12, caractérisé par le fait que la matière riche en fer et/ou aluminium est suspendue dans le liquide aqueux contenant du phosphate.

Vereinfachtes Schema der Phosphatfixierung im Wurzelraum von Lymnophyten